# EUROPÄISCHE PATENTSCHRIFT

(11) **EP 4 202 300 B1**
(45) Veröffentlichungstag und Bekanntmachung des Hinweises auf die Patenterteilung: **10.04.2024**
(21) Anmeldenummer: 22212308.5
(22) Anmeldetag: 08.12.2022
(51) Int. Cl.: F23J 1/08, F23J 1/02, F16K 3/316

(54) **SCHLACKENSCHACHT-SCHIEBER-MODUL FÜR EIN MÜLLHEIZKRAFTWERK**
SLAG SHAFT GATE VALVE MODULE FOR A WASTE-TO-ENERGY PLANT
MODULE DE VANNE DE LA FOSSE À SCORIES POUR UNE CENTRALE D'INCINÉRATION DES DÉCHETS

(30) Priorität: 22.12.2021 CH 0707712021
(43) Veröffentlichungstag der Anmeldung: 28.06.2023
(73) Patentinhaber: EnergieLink GmbH, 8953 Dietikon (CH)
(72) Erfinder: Ludwig, Laurent, 8957 Spreitenbach (CH)
(74) Vertreter: Felber, Josef

(56) Entgegenhaltungen:
- CN-A- 107 694 736
- CN-U- 203 202 266
- CN-U- 215 259 789

## Beschreibung

Der Schieber im Schlackenschacht bei Müllheizkraftwerken dient zur Abgrenzung zwischen dem Verbrennungsrost und dem Entschlacker, um ein sicheres Arbeiten bei der Revision des Entschlackers zu ermöglichen.

Durch die extreme Verschmutzung sowie hohe Luftfeuchtigkeit setzt sich Schlacke an den Innenwänden des Schlackenkanals und am Schieber ab, wodurch das saubere Schliessen nicht mehr möglich ist und dadurch auch kein sicheres Arbeiten unterhalb des Schiebers mehr gewährleistet werden kann. Aus CN 215 259 789 U, auf dem die zweiteilige Form von Anspruch 1 basiert, ist ein gross dimensioniertes zirkulierendes Wirbelschichtkessel-Schlackenabzugs-Ventil bekannt geworden. Es weist einen äusseren Stahlmantel auf und als Besonderheit ist eine Isolierschicht auf der inneren Wand des äusseren Stahlmantels vorgesehen, und diese Isolierschicht ist auf der vom äusseren Stahlmantel abgewandten Seite mit einer hochtemperaturbeständigen und verschleissfesten Schicht mit Siliziumkarbidoberfläche versehen. Der äussere Stahlmantel ist innen mit einer Stopfenplatte verschliessbar und die Stopfenplatte ist an einem vom äusseren Stahlmantel abgewandten Ende mit einer Wärmeisolierkomponente versehen. Die Stopfenplatte vermag aber konstruktionsbedingt den Schlackenabzug nicht auf die Dauer unverschlackt zu halten. Bei Schlackenabzugstüren von Kohlmühlen öffnet und schliesst die Schlackenabzugsöffnung meist durch gleitendes Verschieben einer Türplatte entlang der Rahmenplatte, und der Zweck der Abdichtung von Heissluft und Kohlenstaub wird durch den Kontakt zwischen der Türplatte und der Rahmenplatte erreicht. Während des Betriebs wird die Kohle, die aus der Mühle ausgetragen wird, verkokst. Da der Koks eine relativ hohe Temperatur hat und hart ist, dringt er beim Gleiten der Türplatte leicht zwischen die Türplatte und die Rahmenplatte ein, so dass die Türplatte verformt wird und ein Spalt zwischen der Rahmenplatte und der Türplatte entsteht. Heisse Luft entweicht, was zu einem Schlackentürbrand führen kann. Wenn der Spalt grösser wird, kann die Türplatte die Primärluft und den Dichtungswind nicht mehr abdichten, so dass die Primärluft und der Dichtungswind Kohlenstaub mit sich führen, wodurch die Produktionsumgebung direkt verunreinigt wird und die Gesundheit des Produktionspersonals gefährdet wird. Die CN 10769473A soll dieses Problem lösen und zeigt eine Schlackenaustragstür für einen Pulverisierer, die einen Stapel aus einer Türplatte, daran an deren Flachseiten anschliessend je eine Dichtungsplatte und schliesslich auf denen je eine anschliessende Rahmenplatte angeordnet ist. Zwischen der Rahmenplatten und den Dichtungsplatten sind Druckelemente eingebaut, um die Dichtungsplatten beidseits an die Türplatte anzudrücken und abzudichten, die aber innerhalb der Dichtungsplatten hin und her schiebbar ist. Innerhalb eines Schutzbereiches ist eine Austragsöffnung vorgesehen, über welche die Türplatte schiebbar oder aus dieser Öffnung herausziehbar ist. Durch das Anpressen der Dichtungsplatten wird die Türplatte weitgehend gegenüber der Austragsöffnung abgedichtet. CN 202302266U will die Kräfte zur Betätigung eines Hochtemperatur-Windschlacke Schiebeventils reduzieren. Weil das durch das Ventil strömende Medium um die 500°C heisst ist, und oben auf der Ventilplatte Flugachse anbacken kann und sie daher niederdrückt, erschwert dieser Umstand das Öffnen des Ventils. Um dieses Problem zu lösen, besteht das Ventil aus einem Ventilkörper, einer Ventilplatte, einer Ventilstange, einer Trennplatte und einer Antriebseinheit, die über eine die Ventilstange mit der Ventilplatte verbunden ist, um die Lukenöffnung zu verschliessen. Die Ventilplatte läuft gleitend in Führungsnuten, die aus zwei Führungsschienen oben und unten bestehen, wobei als Besonderheit Stahlkugeln auf der Nut eingebettet sind, sodass die Ventilplatte rollend gelagert ist, was die nötigen Antriebskräfte reduziert.

Die Aufgabe dieser vorliegenden Erfindung ist es hingegen, ein Schlackenschacht-Schieber-Modul für ein Müllheizkraftwerk zu schaffen, das den Schlackenschacht bei Bedarf zuverlässig, sicher und dichtend schliesst und auch eine lange Standzeit bietet, und auch nach vielen Öffnungs- und Schliesszyklen den Schlackenschacht im Bereich des Schiebers sauber und frei von Anbackungen halt, sodass er stets dichtend verschliessbar ist.

Diese Aufgabe wird gelöst von einem Schlackenschacht-Schieber-Modul für ein Müllheizkraftwerk, das eine Schieberplatte einschliesst, welche quer zum Schacht, der von einem Stahlrahmen umfasst ist, und in dessen Schacht-Querschnitt einschiebbar und wieder zurückziehbar ist, und das sich dadurch auszeichnet, dass die Schieberplatte mit ihrer Frontseite über den freien Schacht-Querschnitt hinaus in den Schacht-Querschnitt schiebbar ist, indem ein Bereich in der Schachtwand direkt vor der Frontseite der Schieberplatte als Leiste ausgeführt ist, die von der Schachtwand ausgenommen ist und von der Ebene der Schachtwand aus in dieselbe hinein verschiebbar ist.

Anhand der Figuren wird dieses Schlackenschacht-Schieber-Modul näher beschrieben und seine Funktionsweise wird erklärt und erläutert.

Es zeigt:
- Figur 1:: Einen Schlackentrichter und unten den anschliessenden Schlackenkanal;
- Figur 2:: Das Schlackenschacht-Schieber-Modul von schräg oben in perspektivischer Ansicht dargestellt, mit dem Schieber von links nach rechts wirkend;
- Figur 3:: Das Schlackenschacht-Schieber-Modul von von oben gesehen dargestellt, mit dem Schieber von links nach rechts wirkend;
- Figur 4:: Das Schlackenschacht-Schieber-Modul seitlich geöffnet, von der Seite her gesehen, längs des Schnittes F-F in Figur 3;
- Figur 5:: Das Schlackenschacht-Schieber-Modul seitlich geöffnet, auf die gegenüberliegende Seite gesehen, mit dem Schieber von rechts nach links wirkend;
- Figur 6:: Das Detail A von Figur 5;
- Figur 7:: Das Detail B von Figur 5;
- Figur 8:: Das Schlackenschacht-Schieber-Modul in einer Seitenansicht mit dem Schieber von rechts nach links wirkend;
- Figur 9:: Das Detail C von Figur 8;
- Figur 10:: Das Detail D von Figur 8;
- Figur 11:: Das Schlackenschacht-Schieber-Modul in einer Seitenansicht mit dem Schieber von rechts nach links wirkend, mit der Schieberplatte ganz nach links ausgefahren;
- Figur 12:: Das Detail E von Figur 11;
- Figur 13:: Einen Querschnitt durch das Schlackenschacht-Schieber-Modul mit den beiden seitlichen Führungsschienen und den Stahlrollen für das Verfahren der Schieberplatte;
- Figur 14:: Das Detail D von Figur 13.

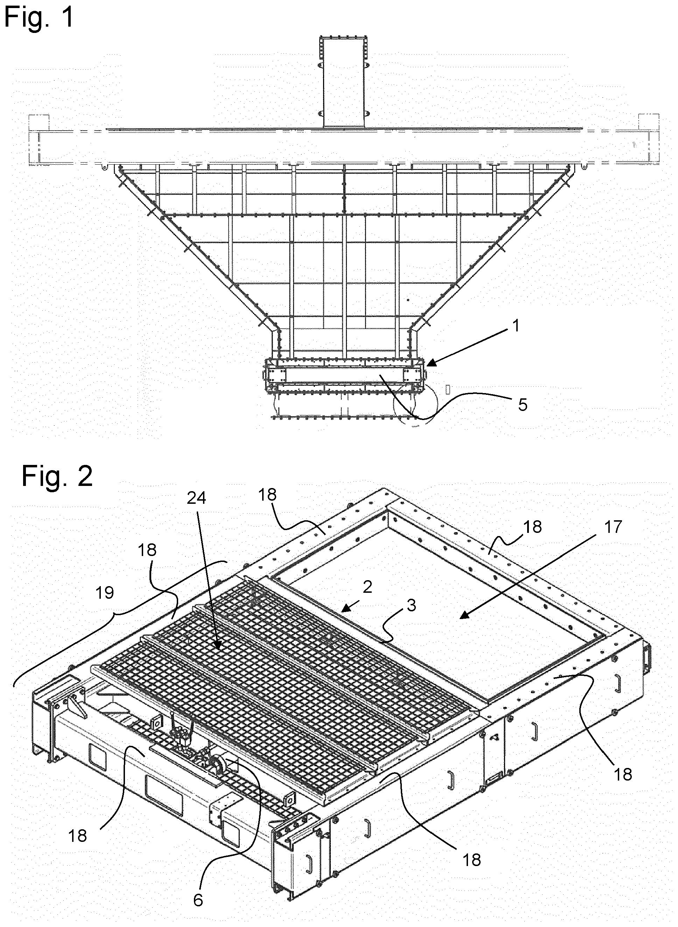

Die Figur 1 zeigt zunächst einen Schlackentrichter mit dem unten anschliessenden Schlackenkanal 1. Dieser Schlackenkanal 1 muss regelmässig verschlossen werden, sodass unterhalb des Kanals 1 Wartungsarbeiten durchgeführt werden können. Bisherige Lösungen für das Verschliessen dieses Schlackenkanals 1 überzeugen nicht, weil Verschmutzungen und Anbackungen im Schlackenschacht 1, besonders in seinen Ecken, verhindern, dass ein Schieber den ganzen Querschnitt verschliesst, weil der Schieber an den Anbackungen Halt macht und an seiner Front gegenüber der Schachtwand 5 dann neben den Anbackungen und Schmutzwiderständen ein Spalt offenbleibt, durch den weiterhin Schlacke nach unten fallen kann.

In Figur 2 ist ein Schlackenschacht-Schieber-Modul gemäss der Erfindung von schräg oben in perspektivischer Ansicht gezeigt, mit dem Schieber 2 von links nach rechts wirkend. Es weist einen rundum laufenden Stahlrahmen 18 auf, der auf der hier rechten Seite einen Bereich 17 freilässt, welcher dem Schachtquerschnitt entspricht. Dieser misst zum Beispiel etwa 2 m x 1 m. Das Modul wird daher so eingebaut, dass der Stahlrahmen 18 mit diesem freibleibenden Bereich 17 den Schachtquerschnitt umfasst, während der hier links im Bild dargestellte Teil 19 den Schacht seitlich horizontal überragt. Auf diesem auskragenden Teil 19 des Moduls ist ein Gitterrost 24 angeordnet, der begehbar ist. Am hinteren Ende des Gitterrostes 24 erkennt man einen Zylinder 6, der einen Kolben enthält, welcher auf eine Schubstange wirkt, welche die Schieberplatte 2 über den ganzen Querschnitt 17 schieben kann, sodass deren Front 3 jenseits des Querschnitts 17 an einer dort in der Schachtwand eingebauten Leiste anschlägt und diese ein stückweit aus der Ebene der Schachtwand in die Schachtwand hineinschieben kann, wie das noch genauer offenbart wird.

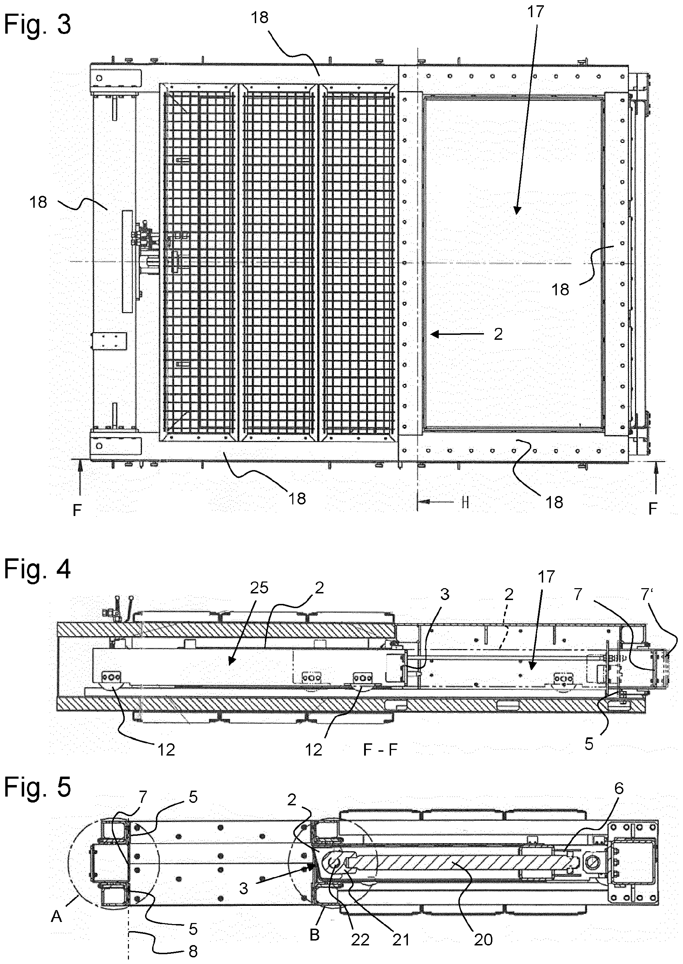

Die Figur 3 zeigt das Schlackenschacht-Schieber-Modul von von oben gesehen, in einer Draufsicht. Das Modul wird aussen begrenzt durch einen umlaufenden Stahlrahmen 18. Rechts im Bild erkennt man den freibleibenden Querschnitt 17, über den hinweg die Schieberplatte 2 aus der hier eingefahrenen Position, in welcher sie sich unsichtbar unterhalb des Gitterrostes 24 befindet, über diesen Querschnitt 17 im Bild von links nach rechts ausfahren kann.

In Figur 4 sieht man dieses Schlackenschacht-Schieber-Modul auf seiner Seite längs des Schnittes F-F in Figur 3 geöffnet und von der Seite her gesehen. Der Schieber bildet eine Schieberplatte 2 auf einem auf Schienen mittels Stahlrollen 12 verfahrbaren Wagen 25. Auf jeder Seite des Wagens 25 sind hier zwei Stahlrollen 12 angeordnet. Der Wagen 25 und somit die Schieberplatte 2 auf seiner Oberseite befindet sich in dieser Abbildung in der zurückgezogenen, eingefahrenen Position. Mit strichpunkt-linierten Linien eingezeichnet ist er auch in der im Bild nach rechts ausgefahrenen Position dargestellt, in welcher die Front der Schieberplatte 2 an einer endseitig in der Schachtwand 5 eingebauten und beweglich in die Schachtwand 5 hinein verschiebbaren Leiste 7 anschlägt und diese ein stückweit in die Schachtwand 5 hinein schiebt. Die Leiste 7 wird von einem ein Stahlprofil gebildet. In der Figur 4 ist diese Leiste 7 einmal in ihrer Ausgangslage gezeigt, in welcher sie vorne bündig mit der Schachtwand 5 verläuft, und einmal strichliniert und mit 7' in der nach rechts aus dem Schachtquerschnitt 17 ein stückweit hinausgeschobener Position. Damit gelingt es, dass die Schieberplatte 2 den Querschnitt 17 des Schlackenschachtes 1 komplett überquert und daher jegliche Verschmutzungen oder Anbackungen aus dem Schlackenkanal 1 hinausgeschoben werden und nach unten fallen.

Die Figur 5 zeigt dieses Schlackenschacht-Schieber-Modul seitlich geöffnet auf die in Bezug auf die Figur 4 gegenüberliegende Seite gesehen, mit der Schieberplatte 2 von rechts nach links wirkend. Links erkennt man die Schlackenwand 5 und ihre Ebene 8. In der Schlackenwand 5 eingebaut ist die Leiste 7 in Form eines Profils. Diese Leiste 7 schliesst vorne, das heisst im Bild gegen rechts, bündig mit der Ebene 8 der Schachtwand 5 ab. Auf der rechten Bildhälfte sieht man eine von oben auf das Modul gesehen mittig angeordnete Schubstange 20, die vorne eine Lasche 21 trägt, welche eine Welle 22 umfasst, die mit dem vorderen Abschluss der Schieberplatte 2 verbunden ist, und von welcher sie nach vorne, das heisst im Bild nach links geschoben wird. Die Schubstange 20 wird von einer Kolben-Zylindereinheit 6 angetrieben, deren Zylinder man in Figur 2 erkennen kann. Am vorderen Abschluss der Schieberplatte 2 erkennt man, dass deren Front 3 abgeschrägt ist, sodass eine überhängend verlaufende Frontseite 3 gebildet ist.

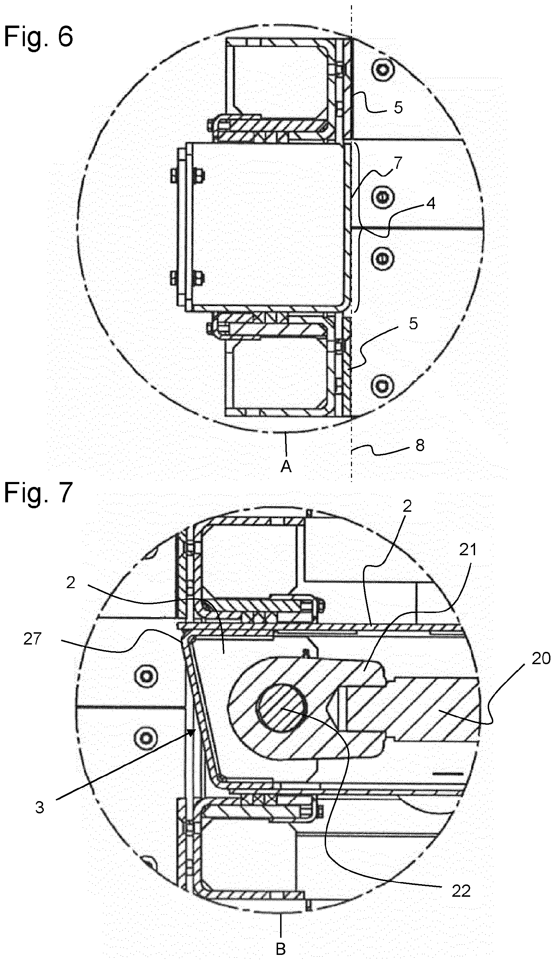

Die Figur 6 zeigt das Detail A von Figur 5, nämlich die Schachtwand 5 mit dem Bereich 4 der Schachtwand 5, die direct vor der Front der Schieberplatte 2 liegt. Dieser Bereich 4 wird von der Leiste 7 gebildet, die quer zu ihrer Verlaufrichtung ein stückweit in die Schachtwand 5 hinein schiebbar ist. Im hier gezeigten Ausgangszustand verläuft die Vorderseite der Leiste 7 genau bündig mit der übrigen Schachtwand 5, also in der Ebene 8 der Schachtwand.

Die Figur 7 zeigt das Detail B von Figur 5, nämlich den Antrieb der Schieberplatte 2 mit ihrer Schubstange 20, der Lasche 21 und der Welle 22, die mit dem vorderen Abschluss der Schieberplatte 2 verbunden ist. Man erkennt, dass die Front 3 der Schieberplatte 2 hier schiefwinklig zum Lot verläuft, also gewissermassen überhängend. Damit wird erreicht, dass jegliche Schlackenrückstände, die von der Schieberplatte 2, nachdem sie mit ihrer Nase 27 die Leiste 7 aus der Schachtwand 5 in diese hinein zurückverschob, ohne weiteres nach unten fallen können, wo sie also ausserhalb des Schlackenschachtes 1 aufgefangen werden können.

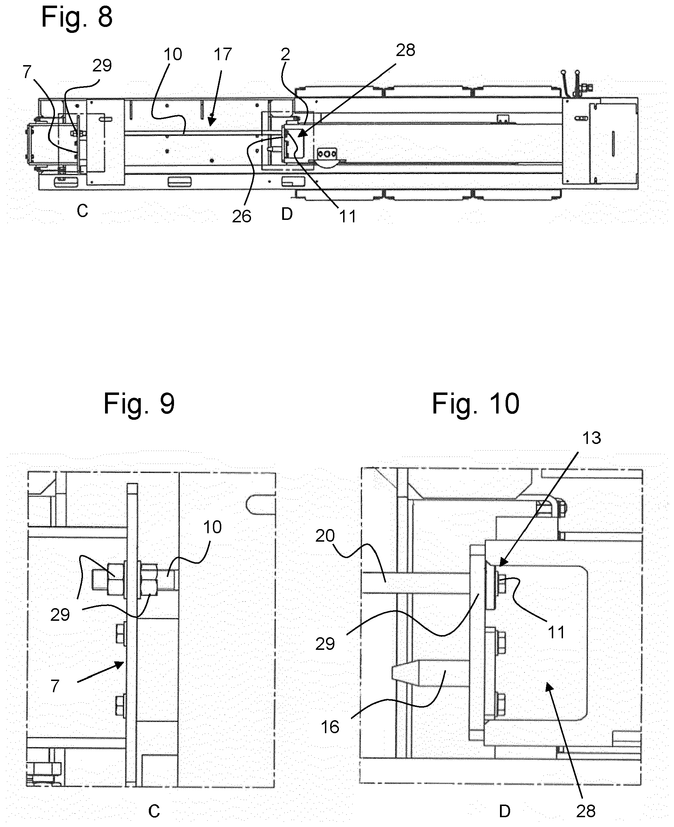

Die Figur 8 zeigt das Schlackenschacht-Schieber-Modul in einer Seitenansicht mit der Schieberplatte 2 von rechts nach links wirkend. Eine Stösselstange 10 ist vorne mit der Leiste 7 mittels einer Verschraubung 29 fest verbunden. Hinten ist diese Stösselstange 10 an der Schieberplatte 2 geführt, wie man durch die Ausnehmung 28 hindurch blickend erkennt. Wenn die Schieberplatte 2 über den Schachtquerschnitt 17 fährt, schiebt sie sich über die Stösselstange 10 vorwärts, weil diese vorne an der Leiste 7 fest mit dieser verschraubt ist, aber durch die Führungsplatte 26 an der Schieberplatte 2 durchgleitend geführt ist. Beim Zurückziehen der Schieberplatte 2 aber nimmt die Stösselstange 10 die Leiste 7 in der Schlussphase des Zurückziehens dank der endseitigen Mutter oder Schraube 11, die als Mitnehmer wirkt, mit und zieht sie wieder in ihre ursprüngliche Ausgangsposition, in welcher ihre Front bündig mit der Schachtwand 5 verläuft.

Hierzu zeigt Figur 9 das Detail C von Figur 8. Die Stösselstange 10 ist fest mittels der Verschraubung 29 mit der Leiste 7 verbunden. Die Stösselstange 10 kann an der Führungsplatte 26 an der Schieberplatte 2 geführt nach hinten gleiten, bis die Schieberplatte 2 mit ihrer Nase 27 die Leiste 7 ein stückweit in die Schachtwand 5 hineingeschoben hat. Am hinteren Ende 13 der Stösselstange 10 sitzt eine Mutter oder Schraube 11, die als Mitnehmer wirkt. Wenn die Schieberplatte 2 zurückgefahren wird, gleitet die Stösselstange 10 zunächst durch die Führungsplatte 26 und ganz am Schluss schlägt die Mutter oder Schraube 11 an dieser Führungsplatte 26 an der Schieberplatte 2 an und die Stösselstange 10 zieht dann die Liste 7 in ihren Ausgangszustand zurück, in welcher ihre Front bündig mit der Schlackenwand 5 verläuft.

In Figur 10 ist das Detail D von Figur 8 vergrössert dargestellt. Man erkennt hier durch die Ausnehmung 28 hindurch blickend, wie die Stösselstange 20 an der Schieberplatte 2 durch die Führungsplatte 26 geführt ist. Die Unterlagsscheibe und die Mutter oder Schraube 11 am hinteren Ende 13 der Stösselstange 10 wirken als Mitnehmer. Der an der Führungsplatte 26 fest verschraubte Stangenstumpf 16 fährt zusammen mit der Schieberplatte 2 nach vorne, das heisst im Bild von rechts nach links. Der Stangenstumpf 16 sorgt mit seinem kegelförmigen Ende für eine Zentrierung der Schieberplatte 2 am Ende, wenn sie an der Leiste 7 anschlägt, indem die Spitze des Stangenstumpfs 16 in eine dortige Vertiefung eindringt und einpasst.

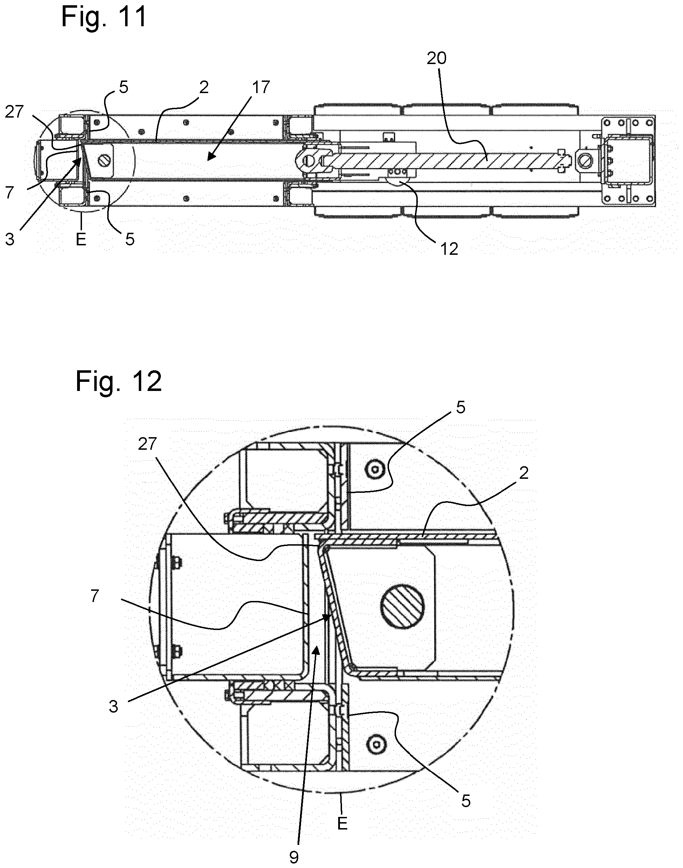

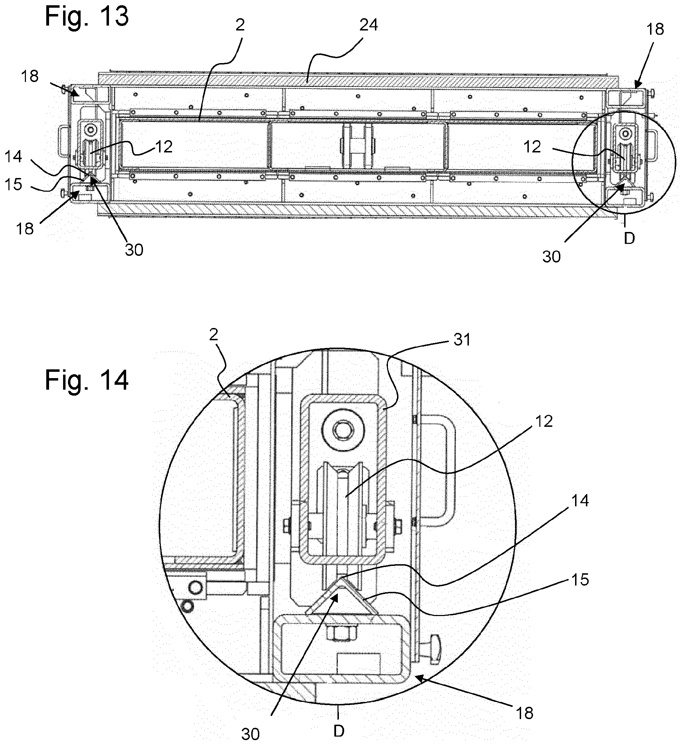

Die Figur 11 zeigt das Schlackenschacht-Schieber-Modul in einer Seitenansicht mit der Schieberplatte 2 von rechts nach links wirkend, und mit der Schieberplatte 2 ganz nach links ausgefahren. Wie man sieht hat die Schieberplatte 2 mit ihrer Nase 27 die Leiste 7 und deren Profil ein stückweit in die Schachtwand 5 hinein geschoben, sodass also die Schieberplatte 2 den Schachtquerschnitt 17 dort komplett überquerte und noch etwas weiter. Es können daher keine Anbackungen stehenbleiben, welche die Schieberplatte 2 zum Stoppen bringen. Vielmehr werden solche von der Front 3 der Schieberplatte 2 aus dem Querschnitt 17 des Schachtkanals 1 geschoben und fallen hernach ausserhalb der Schachtkanals 1 innerhalb des Luftspaltes zwischen der zurückgeschobene Leiste 7 und der Nase 23 und Front 3 der Schieberplatte 2 nach unten. Das ist in Figur 12 als Detail E von Figur 11 vergrössert dargestellt, wo man den Luftspalt 9 zwischen der Front 3 der Schieberplatte 2 und Leiste 7 deutlich erkennt. In der rechten Seite der Figur 11 sieht man wiederum die Schubstange 20 für das hydraulische nach vorne Schieben der Schieberplatte 2. Und man erkennt auch eine der Stahlrollen 12, auf welche die Schieberplatte 2 als Wagen 25 rollend gelagert ist, wie das anhand der Figuren 13 und 14 noch genauer aufgezeigt wird.

Hierzu zeigt die Figur 13 einen Querschnitt durch das Schlackenschacht-Schieber-Modul mit Blickrichtung in die Bewegungsrichtung der Schieberplatte 2. Wie man sieht sind links und rechts im Modul auf dessen Stahlrahmen 18 Schienen 30 angeordnet, auf jeder Seite durch ein Winkelprofil 15 gebildet, das mit seiner Aussenkante 14 nach oben angeordnet ist. Auf diesen Winkelprofilen 15 rollen Stahlrollen 12 ab, die eine Lauffläche mit V-förmigem Einschnitt in Laufrichtung aufweisen, sodass sie stets auf dem Winkelprofil 15 zentriert und geführt werden. Oben auf dem Modul ist dieses mittels eines Gitterrostes 24 begehbar.

In der Figur 14 ist die Lagerung einer Stahlrolle 12 und ist ihre Schiene 30 in Form des Winkelprofils 15 durch die vergrösserte Darstellung des Details D von Figur 13 deutlicher erkennbar. Die Stahlrollen 12 sind in den Stahlprofilen 31 drehbar gelagert. Damit ist die Schieberplatte 2 mit ihrem Wagen 25 auf beiden Seiten des Moduls auf Schienen 30 sicher geführt.

### Zlffernverzeichnis

- 1: Schlackenschacht
- 2: Schieberplatte
- 3: Frontseite
- 4: Bereich in der Schachtwand 5 vor der Fronsteiste 6 der Schieberplatte 1
- 5: Schachtwand
- 6: Zylinder für Kolben und Schubstange
- 7: Leiste
- 8: Ebene der Schachtwand
- 9: Luftspalt zwischen Front 3 Schieberplatte 2 und Leiste 7
- 10: Stösselstange
- 11: Mitnehmer, Schraube, Mutter
- 12: Stahlrollen
- 13: Enden der Stösselstangen 10
- 14: Aussenkante Winkelprofil
- 15: Winkelprofil
- 16: Stangenstumpf an Führungsplatte 26
- 17: Schacht-Querschnitt
- 18: Stahlrahmen rundum
- 19: Begehbarer Teil des Moduls
- 20: Schubstange
- 21: Lasche vorne an Schubstange
- 22: Welle in der Lasche, verbunden mit dem Profil für die Schieberfront
- 23: Nase an der Front 3 der Schieberplatte 2
- 24: Gitterrost begehbar
- 25: Verfahrbarer Wagen
- 26: Führungsplatte für Stösselstange 10
- 27: Nase an der Front 3 der SChieberplatte 2
- 28: Ausnehmung im Rahmen 18
- 29: Vordere Verschraubung der Stösselstange 10 an der Leiste 7
- 30: Schienen für den Wagen 25
- 31: Stahlprofil für die Lagerung der Stahlrollen 12

## Patentansprüche

1. Schlackenschacht-Schieber-Modul für ein Müllheizkraftwerk, das eine Schieberplatte (2) einschliesst, welche quer zu einem Schlackenschacht (1) in dessen Schacht-Querschnitt (17) einschiebbar und wieder zurückziehbar ist, wobei die Schieberplatte (2) mit ihrer Frontseite (3) über den freien Schacht-Querschnitt (17) hinaus in den Schacht-Querschnitt (17) schiebbar ist, ***dadurch gekennzeichnet, dass*** der Schlackenschacht (1) von einem Stahlrahmen (18) umfasst ist, und dass die Schieberplatte (2) mit ihrer Frontseite (3) über den freien Schacht-Querschnitt (17) hinaus in den Schacht-Querschnitt (17) schiebbar ist, indem ein Bereich (4) in der Schachtwand (5) direkt vor der Frontseite (3) der Schieberplatte (2) als Leiste (7) ausgeführt ist, die von der Schachtwand (5) ausgenommen ist und von der Ebene (8) der Schachtwand (5) aus in dieselbe (8) hinein verschiebbar ist.

2. Schlackenschacht-Schieber-Modul nach Anspruch 1,
***dadurch gekennzeichnet, dass***
die Schieberplatte (2) einen Wagen (25) bildet, der im Stahlrahmen (18) beidseits auf zwei Stahlrollen (12) auf Schienen (30) geführt ist.

3. Schlackenschacht-Schieber-Modul nach Anspruch 1,
***dadurch gekennzeichnet, dass***
die Schieberplatte (2) einen Wagen (25) bildet, der im Stahlrahmen (18) beidseits auf zwei Stahlrollen (12) auf Schienen (30) geführt ist, wobei die Schienen (30) für die Stahlrollen (12) je von einem Winkelprofil (15) gebildet sind, das mit seiner Aussenkante (14) nach oben am Stahlrahmen (18) befestigt ist, und die Stahlrollen (12) eine Lauffläche mit V-förmigem Einschnitt längs der Laufrichtung aufweisen, sodass sie formschlüssig auf den Winkelprofilen (15) und somit auf denselben zentriert abrollen.

4. Schlackenschacht-Schieber-Modul nach Anspruch 1,
***dadurch gekennzeichnet, dass***
beidseits der Schieberplatte (2) eine in die Schieberichtung der Schieberplatte (2) ausgerichtete Stösselstange (10) durch eine Führungsplatte (26) an der Schieberplatte (2) gleitend angeordnet ist und an ihrem hinteren Ende eine Mutter oder Schraube (11) als Mitnehmer tragen, zum Anschlagen an der Führungsplatte (26), und wobei die vorderen Enden dieser Stösselstangen (10) mittels einer Verschraubung (29) fest mit der Leiste (7) verbunden sind, sodass beim Vorschieben der Schieberplatte (2) die Stösselstangen (10) durch die sich mitbewegende Führungsplatte (26) gleiten, und beim Zurückziehen der Schieberplatte (2) in der Endphase die Mitnehmer (11) an den Führungsplatten (26) anschlagen und die Stösselstangen (10) hernach mit der Schieberplatte (2) zurückfahren und damit die Leiste (7) in ihren Ausgangszustand zurückziehen, in welcher sie bündig mit der Schachtwand (5) abschliesst.

5. Schlackenschacht-Schieber-Modul nach einem der vorangehenden Ansprüche, ***dadurch gekennzeichnet, dass***
beidseits an der Schieberplatte (2) Führungsplatten (26) angeformt sind, die in Schieberichtung der Schieberplatte (2) ausgerichtete Stangenstumpfe (16) tragen, die in der Endphase des Vorschiebens der Schieberplatte (2) dieselbe dank ihrer kegelförmigen Spitzen an der gegenüberliegenden Schachtwand (5) zentrieren, indem sie in dortige Vertiefungen eingreifen und einpassen.

6. Schlackenschacht-Schieber-Modul nach einem der vorangehenden Ansprüche, ***dadurch gekennzeichnet, dass***
die Schieberplatte (2) von ihrer Rückseite her mittels einer hydraulischen Zylinder-Kolbeneinheit über eine Schubstange (20) vor- und rückwärts verfahrbar ist.

7. Schlackenschacht-Schieber-Modul nach einem der Ansprüche 1 bis 5,
***dadurch gekennzeichnet, dass***
die Schieberplatte (2) von ihrer Rückseite her mittels einer hydraulischen Zylinder-Kolbeneinheit über eine Schubstange (20) vor- und rückwärts verfahrbar ist, wobei die Schieberplatte (2) auf der Innenseite ihrer Frontseite (3) eine Welle (22) aufweist, die von einer Lasche (21) umfasst ist, die am vorderen Ende einer Schubstange (20) der hydraulischen Zylinder-Kolbeneinheit sitzt.

8. Schlackenschacht-Schieber-Modul nach einem der vorangehenden Ansprüche, ***dadurch gekennzeichnet, dass***
die Frontseite (3) der Schieberplatte (2) schiefwinklig zum Lot verläuft, sodass sie oben eine Nase (27) bildet, die an der Leiste (7) anzuschlagen bestimmt ist, und von der überhängenden Frontseite (3) ein zur Leiste (7) stets Luftspalt (9) freigelassen ist, sodas von der Frontseite (3) über die Schachtwand (5) hinaus geschobene Schlacke aus dem Luftspalt (9) nach unten fallen kann.

## Claims

1. Slag chute drawer module for a waste-to-energy plant, which comprises a drawer plate (2) which can be pushed in and pulled out transversely to a slag chute (1) and into the cross-section (17) thereof, wherein the drawer plate (2) can be pushed with its end face (3) beyond the free chute cross-section (17) into the chute cross-section (17),
**characterised in that**
the slag shaft (1) is surrounded by a steel frame (18), and **in that** the sliding plate (2) can be pushed with its end face (3) beyond the free shaft cross-section (17) into the shaft cross-section (17), **in that** a region (4) in the shaft wall (5) directly in front of the end face (3) of the sliding plate (2) is formed as a ledge (7) which is excluded from the shaft wall (5) and can be displaced out of the plane (8) of the shaft wall (5) into the same wall (8).

2. Slag chute drawer module according to claim 1,
**characterised in that**
the sliding plate (2) forms a slide (25) which is guided in the steel frame (18) on both sides on two steel rollers (12) on rails (30).

3. Slag chute drawer module according to claim 1,
**characterised in that**
the sliding plate (2) forms a carriage (25) which is guided in the steel frame (18) on both sides on two steel rollers (12) on rails (30), wherein the rails (30) for the steel rollers (12) are each formed by an angle (15), which is attached to the steel frame (18) with its outer edge (14) facing upwards, and the steel rollers (12) have a running surface with a V-shaped incision along the running direction, so that they roll positively on the angle bars (15) and thus centred on these.

4. Slag chute drawer module according to claim 1,
**characterised in that**
on both sides of the sliding plate (2), a push rod (10) aligned in the sliding direction of the sliding plate (2) is arranged on the sliding plate (2) so as to be displaceable by a guide plate (26) and carries a nut or screw (11) at its rear end as a driver in order to bear against the guide plate (26), and wherein the front ends which carry these push rods (10) are firmly connected to the bar (7) by means of a screw connection (29), so that when the sliding plate (2) is advanced, the push rods (10) slide through the guide plate (26), which moves with them, and when the sliding plate (2) is retracted in the final phase, the drivers (11) abut against the guide plates (26) and the push rods (10) are then retracted with the sliding plate (2), thus returning the bar (7) to its initial state in which it is flush with the wall (5) of the shaft.

5. Slag chute drawer module according to one of the preceding claims, **characterised in that**
guide plates (26) are formed on both sides of the sliding plate (2), which carry shaft stubs (16) aligned in the sliding direction of the sliding plate (2), which in the final phase of the advance of the sliding plate (2) centre the latter with their conical tips on the opposite shaft wall (5) by engaging and fitting into the recesses formed there.

6. Slag chute drawer module according to one of the preceding claims, **characterised in that**
the sliding plate (2) can be displaced forwards and backwards from its rear side by means of a hydraulic cylinder-piston unit via a push rod (20).

7. Slag chute drawer module according to one of claims 1 to 5,
**characterised in that**
the sliding plate (2) can be displaced forwards and backwards from its rear side by means of a hydraulic cylinder-piston unit via a push rod (20), the sliding plate (2) having a shaft (22) on the inside of its front side (3), which shaft is surrounded by a tab (21) which is located at the front end of a push rod (20) of the hydraulic cylinder-piston unit.

8. Slag chute drawer module according to one of the preceding claims, **characterised in that**
the front side (3) of the sliding plate (2) is inclined with respect to the plumb line, so that it forms a nose (27) at the top for abutting against the edge (7), and an air space (9) is left free by the front side (3) overhanging with respect to the edge (7), so that the slag pushed by the front side (3) beyond the shaft wall (5) can fall out of the air space (9).

## Revendications

1. Module de tiroir de puits à scories pour une centrale thermique d'ordures ménagères, qui comprend une plaque de tiroir (2) qui peut être insérée transversalement à un puits à scories (1) et dans la section transversale (17) de celui-ci et peut être retirée, la plaque de tiroir (2) pouvant être poussée avec son côté frontal (3) au-delà de la section transversale libre (17) du puits dans la section transversale (17) du puits,
**caractérisé en ce que**
le puits à scories (1) est entouré d'un cadre en acier (18), et **en ce que** la plaque coulissante (2) peut être poussée avec son côté frontal (3) au-delà de la section transversale libre du puits (17) dans la section transversale du puits (17), **en ce qu'**une zone (4) dans la paroi de puits (5) directement devant la face avant (3) de la plaque coulissante (2) est réalisée sous forme de baguette (7) qui est exclue de la paroi de puits (5) et peut être déplacée depuis le plan (8) de la paroi de puits (5) dans cette même paroi (8).

2. Module de tiroir de puits à scories selon la revendication 1,
**caractérisé en ce que**
la plaque coulissante (2) forme un chariot (25) qui est guidé dans le cadre en acier (18) des deux côtés sur deux galets en acier (12) sur des rails (30).

3. Module de tiroir de puits à scories selon la revendication 1,
**caractérisé en ce que**
la plaque coulissante (2) forme un chariot (25) qui est guidé dans le cadre en acier (18) des deux côtés sur deux galets en acier (12) sur des rails (30), les rails (30) pour les galets en acier (12) étant formés chacun par une cornière (15) qui est fixée avec son bord extérieur (14) vers le haut sur le cadre en acier (18), et les galets en acier (12) présentant une surface de roulement avec une entaille en forme de V le long de la direction de roulement, de sorte qu'ils roulent par complémentarité de forme sur les cornières (15) et donc centrés sur celles-ci.

4. Module de tiroir de puits à scories selon la revendication 1,
**caractérisé en ce que**
de part et d'autre de la plaque coulissante (2), une tige-poussoir (10) orientée dans le sens de coulissement de la plaque coulissante (2) est disposée de manière coulissante sur la plaque coulissante (2) par une plaque de guidage (26) et porte à son extrémité arrière un écrou ou une vis (11) en tant qu'entraîneur, pour venir buter contre la plaque de guidage (26), et les extrémités avant portant ces tiges-poussoirs (10) étant reliées de manière fixe à la baguette (7) au moyen d'un vissage (29), de sorte que, lors de l'avance de la plaque coulissante (2), les tiges-poussoirs (10) glissent à travers la plaque de guidage (26) qui se déplace avec elles, et que, lors du retrait de la plaque coulissante (2) dans la phase finale, les entraîneurs (11) viennent buter contre les plaques de guidage (26) et les tiges-poussoirs (10) se rétractent ensuite avec la plaque coulissante (2) et ramènent ainsi la baguette (7) dans son état initial, dans lequel elle se termine à fleur de la paroi (5) du puits.

5. Module de tiroir de puits à scories selon l'une des revendications précédentes, **caractérisé en ce que**
des plaques de guidage (26) sont formées de part et d'autre de la plaque coulissante (2), lesquelles portent des troncs de tige (16) orientés dans le sens de coulissement de la plaque coulissante (2) qui, dans la phase finale de l'avancement de la plaque coulissante (2), centrent cette dernière, grâce à leurs pointes coniques, sur la paroi de puits (5) opposée en s'engageant et en s'adaptant dans les creux qui y sont pratiqués.

6. Module de tiroir de puits à scories selon l'une des revendications précédentes, **caractérisé en ce que**
la plaque coulissante (2) peut être déplacée vers l'avant et vers l'arrière à partir de sa face arrière au moyen d'une unité cylindre-piston hydraulique par l'intermédiaire d'une tige de poussée (20).

7. Module de tiroir de puits à scories selon l'une quelconque des revendications 1 à 5,
**caractérisé en ce que**
la plaque coulissante (2) peut être déplacée vers l'avant et vers l'arrière depuis sa face arrière au moyen d'une unité cylindre-piston hydraulique par l'intermédiaire d'une tige de poussée (20), la plaque coulissante (2) présentant sur la face intérieure de sa face avant (3) un arbre (22) qui est entouré par une patte (21) qui se trouve à l'extrémité avant d'une tige de poussée (20) de l'unité cylindre-piston hydraulique.

8. Module de tiroir de puits à scories selon l'une des revendications précédentes, **caractérisé en ce que**
la face avant (3) de la plaque coulissante (2) est inclinée par rapport à l'aplomb, de sorte qu'elle forme en haut un nez (27) destiné à venir buter contre le rebord (7), et un espace d'air (9) est laissé libre par la face avant (3) en surplomb par rapport au rebord (7), de sorte que les scories poussées par la face avant (3) au-delà de la paroi du puits (5) peuvent tomber hors de l'espace d'air (9).
